# EUROPEAN PATENT APPLICATION

(11) **EP 1 883 128 A1**
(43) Date of publication of application: **30.01.2008**
(21) Application number: 06730887.4
(22) Date of filing: 31.03.2006
(51) Int. Cl.: H01M 8/02, H01M 8/10

(54) **FUEL CELL**

(30) Priority: 31.03.2005 JP 2005100340
(71) Applicant: KABUSHIKI KAISHA TOSHIBA, Tokyo 105-8001 (JP)
(72) Inventor: SATOH, Asako, 1-1, Shibaura 1-chome Minato-ku Tokyo 105-8001 (JP); NEGISHI, Nobuyasu, 1-1, Shibaura 1-chome Minato-ku Tokyo 105-8001 (JP); KAN, Hirofumi, 1-1, Shibaura 1-chome Minato-ku Tokyo 105-8001 (JP); ICHIKAWA, Katsumi, 1-1, Shibaura 1-chome Minato-ku Tokyo 105-8001 (JP); ONODERA, Shinichi, 1-1, Shibaura 1-chome Minato-ku Tokyo 105-8001 (JP); KUDO, Masakazu, 1-1, Shibaura 1-chome Minato-ku Tokyo 105-8001 (JP)
(74) Representative: Henkel, Feiler & Hänzel
(86) International application number: PCT/JP2006/306939
(87) International publication number: WO 2006/106969

(57) **Abstract**

A fuel cell using a liquid fuel containing methanol with a concentration of more than 50 mol% and no more than 100 mol%, the fuel cell includes a cathode catalyst layer (2), an anode catalyst layer (3) to which a vaporized component of the liquid fuel is supplied, and a proton conductive membrane (6) provided between the cathode catalyst layer (2) and the anode catalyst layer (3), wherein a ratio (L : L₀) of a thickness L to a thickness L₀ is more than 1:1 and no more than 5:1 assuming a total thickness of the cathode catalyst layer (2) and the anode catalyst layer (3) to be represented by L and a thickness of the proton conductive membrane (6) to be represented by L₀.

## Description

### Technical Field

The present invention relates to a fuel cell employing a system for feeding a vaporized fuel obtained by vaporizing a liquid fuel to an anode catalyst layer.

### Background Art

In recent years, various electronic devices such as personal computers and cellular telephones have become compact as a result of developments in semiconductor technologies, and attempts are being made to use fuel cells in these compact devices. Fuel cells have an advantage that to generate electricity merely requires the supply of fuel and an oxidizer, and continuous electricity generation merely requires the fuel to be replenished. Therefore, they are very advantageous systems to power portable electronic devices if they can be compact. In particular, since a direct methanol fuel cell (DMFC) is able to directly obtain an electric current from methanol on an electrode catalyst using methanol having a high energy density as a fuel, the fuel cell has a potential to be miniaturized without using any reformers. DMFC is quite promising as a power source for small-sized devices since handling of the fuel is easier than a hydrogen gas fuel.

Known methods for feeding the fuel to DMFC include a gas feed DMFC where the fuel is supplied into the fuel cell with a blower after vaporizing the liquid fuel, a liquid feed DMFC where the liquid fuel is directly supplied into the fuel cell with a pump, and an internal vaporization DMFC as disclosed in Japanese Patent No. 3413111.

The internal vaporization DMFC disclosed in Japanese Patent No. 3413111 has a fuel permeation layer for retaining a liquid fuel and a fuel vaporization layer for diffusing a vaporized component of the liquid fuel retained in the fuel permeation layer, and the vaporized liquid fuel is supplied from the fuel vaporizing layer to a fuel electrode. In Japanese Patent No. 3413111, an aqueous methanol solution in which methanol and water are mixed in 1:1 molar ratio is used as the liquid fuel, and both methanol and water are supplied to the fuel electrode as vaporized gases.

However, the internal vaporization DMFC disclosed in Japanese Patent No. 3413111 has been unable to attain sufficiently high output power performance. Since water has a lower vapor pressure than that of methanol and the vaporization speed of water is slower than that of methanol, the feed amount of water is deficient relative to the feed amount of methanol when methanol as well as water is supplied to the fuel electrode through the fuel vaporization layer. Consequently, since the reaction resistance of the reaction for internal reforming of methanol is increased, sufficient output power performance cannot be obtained.

### Disclosure of Invention

Accordingly, an object of the invention is to improve output power performance of a fuel cell provided with an anode catalyst layer to which a vaporized component of liquid fuel is supplied.

According to an aspect of the present invention, there is provided a fuel cell comprising:
a cathode catalyst layer;
an anode catalyst layer to which a vaporized component of a liquid fuel is supplied; and
a proton conductive membrane provided between the cathode catalyst layer and the anode catalyst layer,
wherein the liquid fuel contains methanol with a concentration of more than 50 mol% and no more than 100 mol%, and a ratio (L : L₀) of a thickness L to a thickness L₀ is more than 1:1 and no more than 5:1 assuming a total thickness of the cathode catalyst layer and the anode catalyst layer to be represented by L and a thickness of the proton conductive membrane to be represented by L₀.

According to another aspect of the present invention, there is provided a fuel cell using a liquid fuel containing methanol with a concentration of more than 50 mol% and no more than 100 mol%, the fuel cell comprising:
a cathode catalyst layer;
an anode catalyst layer to which a vaporized component of the liquid fuel is supplied; and
a proton conductive membrane provided between the cathode catalyst layer and the anode catalyst layer,
wherein a ratio (L : L₀) of a thickness L to a thickness L₀ is more than 1:1 and no more than 5:1 assuming a total thickness of the cathode catalyst layer and the anode catalyst layer to be represented by L and a thickness of the proton conductive membrane to be represented by L₀.

### Brief Description of Drawings

FIG. 1 is a cross-sectional view schematically illustrating a direct methanol fuel cell according to an embodiment of the invention.
FIG. 2 is a graph showing a relation between current density and cell voltage of direct methanol fuel cells according to Examples 1 to 5 and Comparative Examples 1 to 3.
FIG. 3 is a graph showing time-dependent changes of output power density of the direct methanol fuel cells according to Examples 1 to 5 and Comparative Examples 1 to 3.
FIG. 4 is a graph showing a relation between the current density and cell voltage of the direct methanol fuel cells according to Examples 1 to 7 and Comparative Examples 1 to 4.
FIG. 5 is a graph showing time-dependent changes of the output power density of the direct methanol fuel cells according to Examples 1 to 7 and Comparative Examples 1 to 4.

### Best Mode for Carrying Out the Invention

The inventors of the invention have found, through intensive studies, that output power performance and time-dependent stability of the output power of a fuel cell can be stabilized by satisfying the following conditions (a) and (b) in the fuel cell comprising a fuel vaporization layer for feeding gas components of liquid fuel to an anode catalyst layer. This is because the anode catalyst layer may be sufficiently hydrated with water in a cathode catalyst layer.
(a) The concentration of methanol in the liquid fuel is controlled to be more than 50 mol% and 100 mol% or less.
(b) The ratio (L : L₀) between a total thickness L of the cathode catalyst layer and the anode catalyst layer and a thickness L₀ of a proton conductive membrane, namely, the ratio (L : L₀) of the total thickness L of the cathode catalyst layer and the anode catalyst layer to the thickness L₀ of the proton conductive membrane, is adjusted to be more than 1:1 and 5:1 or less. The ratio (L : L₀) denotes the proportion of the total thickness L when the thickness L₀ of the proton conductive membrane is assumed to be 1.

Controlling the concentration of methanol in the liquid fuel to be more than 50 mola and no more than 100 mol% permits the amount of water supplied to the anode catalyst layer though the fuel vaporization layer to be reduced or to be zero. On the other hand, while water is generated at the cathode catalyst layer by power generation, the ratio of thickness (L/L₀) larger than 1:1 and 5:1 or less permits the amount of generation of water per unit volume to be increased at the cathode catalyst layer without causing the problem of cross-over of methanol.

Defining the thickness ratio of the catalyst layers to the proton conductive membrane and methanol concentration as described above permits the amount of retention of water at the cathode catalyst layer to be larger than that at the anode catalyst layer. As a result, diffusion of water from the cathode catalyst layer to the anode catalyst layer may be facilitated by an osmotic phenomenon. Accordingly, since feed of water to the anode catalyst layer is improved as compared with feed of water to the anode catalyst layer only by the fuel vaporization layer, reaction resistance of the internal reforming reaction of the fuel may be reduced to improve the output power performance and time-dependent stability of the output power.

Since water generated in the cathode catalyst layer is made available in the internal reforming reaction of the liquid fuel in the anode catalyst layer according to the invention, the burden of treatment such as discharge of water generated in the cathode catalyst layer out of the fuel cell may be reduced while no special structure for feeding water to the liquid fuel is needed. Therefore, the invention provides a fuel cell having a simple structure.

In addition, a fuel having a high concentration which exceeds a stoichiometric ratio, which has been theoretically impossible to use, may be used according to the invention. Reduction of the size of a liquid fuel tank is also possible.

The reason why the ratio of thickness (L : L₀) is restricted within the above-mentioned range will be described in detail below. Since the amount of generation of water per unit volume at the cathode catalyst layer is insufficient when the ratio of thickness (L : L₀) is 1:1 or less, the amount of retained water is deficient in the anode catalyst layer. On the other hand, cross-over of methanol tends to be caused when the ratio of thickness (L : L₀) exceeds 5:1. Accordingly, the range of the ratio of thickness (L : L₀) is more preferably in the range of 2:1 to 5:1, further preferably in the range of 2:1 to 4:1.

The inventors of the invention have also found that the output power performance and time-dependent stability of the output of the fuel cell may be further improved by adjusting the ratio between the thickness L₁ of the anode catalyst layer and the thickness L₂ of the cathode catalyst layer, namely, the ratio (L₁ : L₂) of the thickness L₁ of the anode catalyst layer to the thickness L₂ of the cathode catalyst layer, in the range of 1:1 to 2:1. The ratio of thickness (L₁ : L₂) denotes the proportion of the thickness L₁ of the anode catalyst layer when the thickness L₂ of the cathode catalyst layer is assumed to be 1.

Vaporization of water from the anode catalyst layer may be suppressed by adjusting the ratio of thickness (L₁ : L₂) to be 1:1 or more. Retention of water at the anode catalyst layer may be improved to consequently increase the amount of water miscible with methanol in the interface between the proton conductive membrane and the catalyst layer. This enables a stoichiometric relation of the reaction to be ensured while a catalyst layer binder susceptible to high concentration of methanol can be protected. However, over-voltage applied to the cathode increases when the ratio of thickness (L₁ : L₂) is larger than 2:1, and time-dependent deterioration of the catalyst at the cathode side and proton conductive membrane may be caused.

For the above-mentioned reasons, output power performance and time-dependent stability of output may be further improved by adjusting the ratio of thickness (L₁ : L₂) in the range of 1:1 to 2:1.

A more preferable range of the ratio of thickness (L₁ : L₂) is from 1:1 to 1.5:1.

The cathode catalyst layer, another catalyst layer, proton conductive membrane, liquid fuel and fuel vaporization layer will be described below.

### 1) Cathode catalyst layer and anode catalyst layer

Examples of the catalyst contained in the cathode catalyst layer and anode catalyst layer include pure metals of the platinum group elements (such as Pt, Ru, Rh, Ir, Os and Pt) and alloys containing the platinum group elements. While Pt-Ru alloys highly resistant to methanol and carbon monoxide are desirably used for the anode catalyst and platinum is desirably used for the cathode catalyst, the material is not restricted thereto. For example, a substance being active to redox of methanol and a substance being active to oxidation of proton with oxygen may be used for the anode catalyst and cathode catalyst, respectively.

A supported catalyst using a conductive support such as a carbon material or a non-support catalyst may also be used.

### 2) Proton conductive membrane

Examples of a proton conductive material contained in a proton conductive electrolyte membrane include, but are not limited to, fluorinated resins having sulfonic acid groups (for example perfluorosulfonic acid based polymers), hydrocarbon based resins having sulfonic acid groups, hydrocarbon based resins having sulfonic acid groups as well as imide groups or amino groups in the main chain, and inorganic materials such as tungstic acid and phosphorus wolframate.

The proton conductive membrane containing the perfluorosulfonic acid based polymer is desirably used for improving water retention of the anode catalyst layer.

An example of the perfluorosulfonic acid based polymer is a perfluorocarbon sulfonic acid polymer, which is a polymer produced by cross-linking or polymerization and exhibits various performance depending on the degree of substitution of the main chain with fluorine, degree of polymerization and the length of the side chain.

The thickness of the proton conductive membrane is desirably 100 µm or less. This thickness permits diffusion of water from the cathode catalyst layer to the anode catalyst layer to be more facilitated to obtain a higher output power density. However, the thickness of the proton conductive electrolyte membrane is preferably in the range of 10 to 100 µm, since the strength of the electrolyte membrane may be reduced when the thickness of the proton conductive electrolyte membrane is less than 10 µm. A more preferable range of the thickness is from 10 to 80 µm.

### 3) Liquid fuel

An aqueous methanol solution with a methanol concentration of more than 50 mol% and less than 100 mol%, or pure methanol (methanol concentration of 100 mol%) may be used for the liquid fuel. The purity of pure methanol is desirably in the range of 95% to 100% by weight.

### 4) Fuel vaporization layer

A gas-liquid separation membrane that is capable of permeating only a vaporized component of the liquid fuel but does not permeate the liquid fuel may be used as the fuel vaporization layer. The vaporized component of the liquid fuel as used herein refers to vaporized methanol when liquid methanol is used as the liquid fuel, while it refers to a mixed gas containing the vaporized components of methanol and water when the aqueous methanol solution is used as the liquid fuel. An example of the gas-liquid separation membrane is a silicone rubber sheet.

The direct methanol fuel cell as an embodiment of the fuel cell according to the invention will be described hereinafter with reference to the drawings.

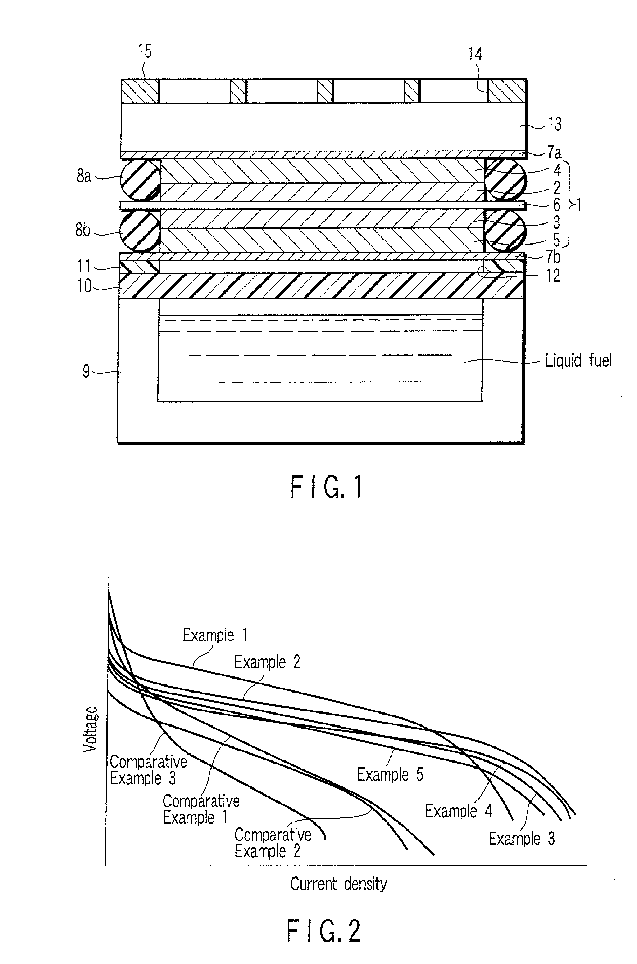

FIG. 1 is a cross-sectional view schematically illustrating a direct methanol fuel cell according to an embodiment of the invention.

As shown in FIG. 1, a membrane-electrode assembly (MEA) 1 includes: a cathode made of a cathode catalyst layer 2 and a cathode gas diffusion layer 4; an anode made of an anode catalyst layer 3 and an anode gas diffusion layer 5; and a proton conductive electrolyte membrane 6 disposed between the cathode catalyst layer 2 and the anode catalyst layer 3.

The cathode catalyst layer 2 is laminated on the cathode gas diffusion layer 4, while the anode catalyst layer 3 is laminated on the anode gas diffusion layer 5. While the cathode gas diffusion layer 4 serves to evenly feed an oxidant to the cathode catalyst layer 2, it also serves as a current collector of the cathode catalyst layer 2. On the other hand, while the anode gas diffusion layer 5 serves to evenly feed the fuel to the anode catalyst layer 3, it also serves as a current collector of the anode catalyst layer 3. A cathode conductive layer 7a and an anode conductive layer 7b are in contact with the cathode gas diffusion layer 4 and the anode gas diffusion layer 5, respectively. Porous layers made of a metal material such as gold may be used for the cathode conductive layer 7a and the anode conductive layer 7b, respectively. An example of the porous layers includes meshes.

A rectangular frame-shaped cathode seal material 8a is positioned between the cathode conductive layer 7a and the proton conductive electrolyte membrane 6 and surrounds the cathode catalyst layer 2 and the cathode gas diffusion layer 4. On the other hand, a rectangular frame-shaped anode seal material 8b is positioned between the anode conductive layer 7b and the proton conductive membrane 6 and surrounds the anode catalyst layer 3 and the anode gas diffusion layer 5. The cathode seal material 8a and the anode seal material 8b are O-rings for preventing the fuel and oxidant from leaking from the membrane-electrode assembly 1.

A liquid fuel tank 9 is disposed under the membrane-electrode assembly 1. Liquid methanol or an aqueous methanol solution is stored in the liquid fuel tank 9. A gas-liquid separation membrane 10, for example, as a fuel vaporization layer 10 is disposed so as to cover the opening of the liquid fuel tank 9.

A resin frame 11 is disposed between the gas-liquid separation membrane 10 and the anode conductive layer 7b. The space surrounded by the frame 11 functions as a vaporized fuel storage chamber 12 (a so-called vapor pool) for temporarily storing the vaporized fuel diffused through the gas-liquid separation membrane 10. An effect of suppressing the amount of permeated methanol by the vaporized fuel storage chamber 12 and the gas-liquid separation membrane 10 prevents a large amount of vaporized fuel from being supplied to the anode catalyst layer 3 at once, and cross-over of methanol may be suppressed from occurring. The frame 11 is a rectangular frame made of, for example, a thermoplastic polyester resin such as PET.

A humectant plate 13 is laminated on the cathode conductive layer 7a laminated on the membrane-electrode assembly 1. A surface layer 15, on which a plurality of air inlet ports 14 for introducing air as an oxidant are open, is laminated on the humectant plate 13. Since the surface layer 15 also serves to enhance adhesiveness of the stack including the membrane-electrode assembly 1 by pressurizing the stack, the surface layer is made of a metal such as SUS304. The humectant plate 13 serves to prevent water generated in the cathode catalyst layer 2 from being vaporized while it serves as an auxiliary diffusion layer for facilitating uniform diffusion of the oxidant into the cathode catalyst layer 2 by uniformly introducing the oxidant into the cathode gas diffusion layer 4.

According to the direct methanol fuel cell having the above-mentioned structure, the liquid fuel (for example an aqueous methanol solution) in the liquid fuel tank 9 is vaporized, vaporized methanol and water diffuse in the gas-liquid separation membrane 10 and are temporarily stored in the vaporized fuel storage chamber 12. The vaporized fuel is then slowly supplied to the anode catalyst layer 3 by diffusion through the anode gas diffusion layer 5, and methanol is reformed by the internal reforming reaction shown by the following reaction formula (1):

CH₃OH + H₂O → CO₂ + 6H⁺ + 6e⁻ (1)

When pure methanol is used as the liquid fuel, no water is supplied from the fuel vaporization layer. Consequently, water generated by the oxidation reaction of methanol mingled into the cathode catalyst layer 2, or water in the proton conductive electrolyte membrane 6 reacts with methanol to induce the internal reforming reaction represented by the formula (1). Alternatively, the internal reforming reaction occurs by a different reaction mechanism using no water which is not dependent on the formula (1).

Protons (H⁺) generated by the internal reforming reaction diffuse through the proton conductive electrolyte membrane 6 and arrive at the cathode catalyst layer 3. On the other hand, air introduced from the air inlet port 14 on the surface layer 15 is supplied to the cathode catalyst layer 2 by diffusion through the humectant plate 13 and cathode gas diffusion layer 4. Water is generated in the cathode catalyst layer 2 by the reaction represented by the following formula (2):

(3/2)O₂ + 6H⁺ + 6e⁻ → 3H₂O (2)

Water is generated in the cathode catalyst layer 2 by the reaction represented by the formula (2) as a power generation reaction proceeds. Since the ratio (L : L₀) of the total thickness L of the cathode catalyst layer 2 and the anode catalyst layer 3 to the thickness L₀ of the proton conductive membrane 6 is larger than 1:1 and 5:1 or less, the amount of generated water per unit volume may be increased. While the generated water arrives at the humectant plate 13 by diffusion through the cathode gas diffusion layer 4, vaporization of the water is blocked by the humectant plate 13. Accordingly, the amount of stored water in the cathode catalyst layer 2 may be increased by defining the ratio of thickness and by using the humectant plate. In addition, since the concentration of methanol in the liquid fuel is more than 50 mol% and no more than 100 mol%, the amount of water supplied from the fuel vaporization layer to the anode catalyst layer may be reduced.

Consequently, since the amount of retained water in the cathode catalyst layer 2 becomes larger than that in the anode catalyst layer 3 in accordance with progress of the power generation reaction, a reaction for transferring water generated in the cathode catalyst layer 2 to the anode catalyst layer 3 through the proton conductive electrolyte membrane 6 is accelerated by an osmosis phenomenon. This enables the water feed speed to the anode catalyst layer to be improved as compared with the case when feed of water is entirely dependent on the fuel vaporization layer, and the internal reforming reaction of methanol represented by the formula (1) may be facilitated. Accordingly, the output power density may be increased while the high output density may be maintained for a long period of time.

The invention is not restricted to the above-mentioned embodiment, and may be applied to any cases as long as the concentration of methanol in the liquid fuel is more than 50 mol% and no more than 100 mol%, and the ratio (L : L₀) of the total thickness L of the cathode catalyst layer 2 and the anode catalyst layer 3 to the thickness L₀ of the proton conductive membrane 6 is more than 1:1 and no more than 5:1. For example, the fuel cell may have no humectant plate between the cathode gas diffusion layer and the surface layer.

Examples of the invention will be described in detail hereinafter with reference to the drawings.

### (Example 1)

### <Production of anode>

A solution of perfluorocarbon sulfonic acid, water and methoxypropanol were added to carbon black that retained an anode catalyst (Pt : Ru = 1:1), and a paste was prepared by dispersing the anode catalyst-retaining carbon black. The paste obtained was applied to porous carbon paper as an anode gas diffusion layer to obtain an anode catalyst layer with a thickness of 160 µm (excluding the thickness of carbon paper).

### <Production of cathode>

A solution of perfluorocarbon sulfonic acid, water and methoxypropanol were added to carbon black that retained a cathode catalyst (Pt), and a paste was prepared by dispersing the cathode catalyst-retaining carbon black. The paste obtained was applied to porous carbon paper as a cathode gas diffusion layer to obtain a cathode catalyst layer with a thickness of 140 µm (excluding the thickness of carbon paper).

### <Assembly of cell>

A perfluorocarbon sulfonic acid membrane (trade name: Nafion, manufactured by Du Pont) with a thickness of 50 µm and water content of 10 to 20% by weight was disposed between the anode catalyst layer and the cathode catalyst layer as a proton conductive electrolyte membrane, and a membrane-electrode assembly (MEA) was obtained by hot-pressing of the catalyst layers and membrane. The thickness of each layer was calculated from a cross-sectional photograph of the MEA thus obtained. The thickness of the anode catalyst layer was 100 µm excluding the thickness of carbon paper, the thickness of the cathode catalyst layer was 80 µm excluding the thickness of carbon paper, and the thickness of the proton conductive electrolyte membrane was 48 µm.

The ratio between the total thickness L of the cathode catalyst layer and the anode catalyst layer and the thickness L₀ of the proton conductive electrolyte membrane, namely, the ratio (L : L₀) of the total thickness L to the thickness L₀ of the proton conductive electrolyte membrane, and the ratio between the thickness L₁ of the anode catalyst layer and the thickness L₂ of the cathode catalyst layer, namely, the ratio (L₁ : L₂) of the thickness L₁ of the anode catalyst layer to the thickness L₂ of the cathode catalyst layer, are shown in Table 1 below.

A polyethylene porous film with a thickness of 500 µm, a gas permeability of 2 seconds/100 cm³ (JIS P-8117) and a moisture permeability of 4000 g/m²·24h (JIS L-1099 A-1) was prepared as a humectant plate.

The frame 11 was made of PET with a thickness of 25 µm. A silicone rubber sheet with a thickness of 200 µm was prepared as a gas-liquid separation membrane.

A direct methanol fuel cell of an internal vaporization type having the structure shown in FIG. 1 was assembled using the membrane-electrode assembly 1, humectant plate 13, frame 11 and gas-liquid separation membrane 10 obtained. At this time, pure methanol (2 mL) with a purity of 99.9% by weight was stored in the fuel tank.

### (Examples 2 to 5 and Comparative Examples 1 and 2)

Direct methanol fuel cells of the internal vaporization type were assembled by the same method as described in Example 1, except that the thickness of each layer measured from the cross-dimensional photograph of the MEA obtained and the ratios of thickness (L : L₀ and L₁ : L₂) were changed as shown in Table 1.

The thickness of each layer was determined as shown in Table 1 by adjusting the thickness of coating on the carbon paper and the thickness of the perfluorocarbon sulfonic acid membrane before compressing.

### (Comparative Example 3)

A direct methanol fuel cell of the internal vaporization type was assembled by the same method as described in Example 1, except that an aqueous methanol solution with a concentration of 10% by weight was stored in the fuel tank in place of pure methanol, and no humectant plate was disposed between the cathode diffusion layer and the surface layer.

**Table 1**

| | Thickness of anode catalyst layer (µm) | Thickness of cathode catalyst layer (µm) | Ratio of thickness of anode catalyst layer to cathode catalyst layer (L₁:L₂) | Thickness of proton conductive membrane (µm) | Ratio of total thickness of catalyst layers to thickness of proton conductive membrane (L:L₀) |
|---|---|---|---|---|---|
| Example 1 | 100 | 80 | 1.25:1 | 48 | 3.8:1 |
| Example 2 | 65 | 50 | 1.3:1 | 30 | 3.8:1 |
| Example 3 | 65 | 50 | 1.3:1 | 48 | 2.4:1 |
| Example 4 | 50 | 50 | 1:1 | 30 | 3.3:1 |
| Example 5 | 45 | 50 | 0.9:1 | 30 | 3.2:1 |
| Comparative Example 1 | 40 | 50 | 0.8:1 | 100 | 0.9:1 |
| Comparative Example 2 | 100 | 80 | 1.25 | 30 | 6.0:1 |
| Comparative Example 3 | 100 | 80 | 1.25:1 | 48 | 3.8:1 |
| Example 6 | 115 | 90 | 1.3:1 | 48 | 4.2:1 |
| Example 7 | 70 | 50 | 1.3:1 | 80 | 1.5:1 |
| Comparative Example 4 | 100 | 80 | 1.25:1 | 48 | 3.8:1 (methanol 20 wt%) |

Current-voltage curves (I-V curves) were measured for the fuel cells obtained in Examples 1 to 5 and Comparative Examples 1 to 3. Time-dependent changes of the output power of the cell were also measured by generating electricity at room temperature under a constant load. The horizontal axis denotes the power generation time while the vertical axis denotes the output power density. The output power density is represented by a relative output power density assuming that the maximum output power density in Example 1 is 100.

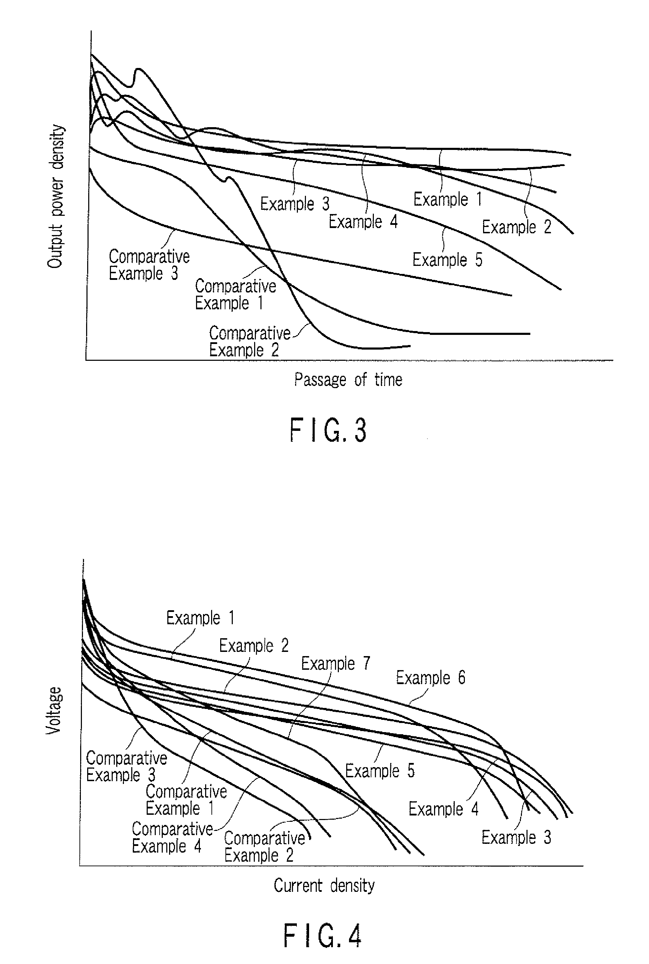

It is evident from FIGS. 2 and 3 that the fuel cells in Examples 1 to 5, which have the ratio (L : L₀) of the total thickness L of the catalyst layers to the thickness L₀ of the proton conductive membrane of more than 1:1 and no more than 5:1, show a smaller voltage drop when the load current is increased and are excellent in time-dependent stability of the output power density, as compared with the fuel cells in Comparative Examples 1 and 2 having the ratio (L : L₀) of thickness out of the above-mentioned range and the fuel cell in Comparative Example 3 with a methanol concentration of 50 mol% or less.

Of Examples 1 to 5, a higher voltage was obtained by the fuel cells in Examples 1 to 4 having the ratio (L₁ : L₂) of the thickness L₁ of the anode catalyst layer to the thickness L₂ of the cathode catalyst layer in the range of 1:1 to 2:1 than the fuel cell in Example 5 having a smaller thickness L₁ of the anode catalyst layer than the thickness L₂ of the cathode catalyst layer, and the former fuel cells were superior in time-dependent stability of the output power density.

### (Examples 6 and 7)

Direct methanol fuel cells of the internal vaporization type were assembled by the same method as described in Example 1, except that the thickness of each layer measured from the cross-sectional photograph of the MEA obtained, the ratio (L : L₀) of thickness and the ratio (L₁ : L₂) of thickness were changed as shown in Table 1.

The thickness of each layer was determined as shown in Table 1 by controlling the thickness of coating on carbon paper and the thickness of the perfluorocarbon sulfonic acid membrane before compression of the membrane.

### (Comparative Example 4)

A direct methanol fuel cell of the internal vaporization type was assembled by the same method as described in Example 1, except that an aqueous methanol solution with a concentration of 20% by weight was stored in the fuel tank in place of pure methanol, and no humectant plate was disposed between the cathode diffusion layer and the surface layer.

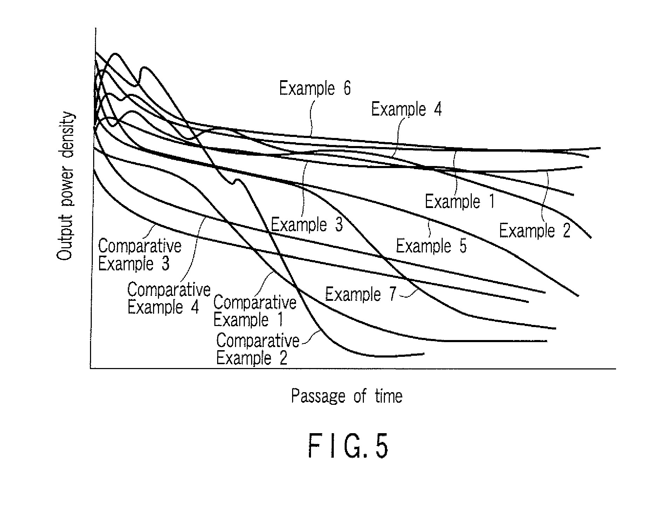

Current-voltage curves (I-V curves) were measured for the fuel cells obtained in Examples 6 and 7 and Comparative Example 4. The results are shown in FIG. 4. Power generation was preformed at room temperature under a constant load, and time-dependent changes of the power output at that time of the cell were measured. The results are shown in FIG. 5. In FIG. 5, the horizontal axis denotes the power generation time while the vertical axis denotes the output power density. The output power density is represented by a relative output power density when the maximum output power density in Example 1 is assumed to be 100. The results in Examples 1 to 5 and Comparative Examples 1 to 3 are also shown in FIGS. 4 and 5.

It is evident from FIGS. 4 and 5 that the fuel cells in Examples 6 and 7, which have a ratio (L : L₀) of the total thickness L of the catalyst layers to the thickness L₀ of the proton conductive membrane of larger than 1:1 and 5:1 or less, show gentle voltage drop against increase of the current density as compared with the fuel cells in Comparative Examples 1 to 4, and that time-dependent stability of the output power density of the former cells is superior to the latter cells in Comparative Examples 1 to 4.

When the methanol concentration of the fuel cell was 50 mol% or less, the voltage drop width at the time of increasing current density was larger in the fuel cells shown in Comparative Examples 3 and 4 than the fuel cells shown in Examples 1 to 7 even when the ratio (L : L₀) was more than 1:1 and no more than 5:1. The initial output power density of the fuel cells in Comparative Examples 3 and 4 were lower than that of the fuel cells in Examples 1 to 7.

Of the fuel cells in Examples 1 to 7, the fuel cells of Examples 1 to 6 having the ratio (L : L₀) in the range of 2:1 to 5:1 showed a smaller voltage drop width when the current density was increased than the fuel cell in Example 7 having the ratio (L : L₀) of 1.5:1, and time-dependent stability of the output power density of the cells of Examples 1 to 6 was superior to that of the cell in Example 7.

The invention is not directly restricted to the above-mentioned embodiments, and may be embodied by modifying the constituting elements in implementing the invention in the range not departing from the spirit of the invention. Various inventions may be constructed by appropriate combinations of a plurality of constituting elements disclosed in the embodiments. For example, some of the constituting elements may be deleted from the entire constituting elements shown in the embodiments, or constituting elements disclosed in different embodiments may be appropriately combined.

## Claims

1. A fuel cell using a liquid fuel containing methanol with a concentration of more than 50 mol% and no more than 100 mol%, the fuel cell comprising:
a cathode catalyst layer;
an anode catalyst layer to which a vaporized component of the liquid fuel is supplied; and
a proton conductive membrane provided between the cathode catalyst layer and the anode catalyst layer,
wherein a ratio (L : L₀) of a thickness L to a thickness L₀ is more than 1:1 and no more than 5:1 assuming a total thickness of the cathode catalyst layer and the anode catalyst layer to be represented by L and a thickness of the proton conductive membrane to be represented by L₀.

2. The fuel cell according to claim 1, wherein the ratio (L : L₀) of the thickness L to the thickness L₀ is 2:1 or more and 5:1 or less.

3. The fuel cell according to claim 1, wherein the ratio (L : L₀) of the thickness L to the thickness L₀ is 2:1 or more and 4:1 or less.

4. The fuel cell according to claim 1, wherein a ratio (L₁ : L₂) of a thickness L₁ to a thickness L₂ is in the range of 1:1 to 2:1 when a thickness of the anode catalyst layer is represented by L₁ and a thickness of the cathode catalyst layer is represented by L₂.

5. The fuel cell according to claim 1, wherein the ratio (L₁ : L₂) of the thickness L₁ to the thickness L₂ is in the range of 1:1 to 1.5:1.

6. The fuel cell according to any one of claims 1 to 5, wherein the proton conductive membrane contains a perfluorosulfonic acid based polymer.

7. The fuel cell according to any one of claims 1 to 5, wherein the proton conductive membrane has a thickness of 100 µm or less.

8. The fuel cell according to any one of claims 1 to 5, wherein the proton conductive membrane has a thickness in the range of 10 to 100 µm.

9. The fuel cell according to any one of claims 1 to 5, wherein the proton conductive membrane has a thickness in the range of 10 to 80 µm.
